(19) Europäisches Patentamt
European Patent Office
Office européen des brevets

(11) EP 0 854 154 A1

(12) # EUROPÄISCHE PATENTANMELDUNG

(43) Veröffentlichungstag:
**22.07.1998 Patentblatt 1998/30**

(51) Int. Cl.[6]: **C08F 2/32**, B01F 17/34

(21) Anmeldenummer: **98100033.4**

(22) Anmeldetag: **03.01.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **16.01.1997 DE 19701293**

(71) Anmelder: **Th. Goldschmidt AG
45127 Essen (DE)**

(72) Erfinder:
- **Dahms, Gerd H.
42549 Velbert (DE)**
- **Müller, Felix, Dr.
42555 Velbert (DE)**

(54) **Emulgatorgemische**

(57) Gegenstand der Erfindung sind Emulgatorgemische zur Herstellung wasserlöslicher Polymerer durch inverse Emulsionspolymerisation entsprechender Monomerer oder Monomergemische, ein Verfahren zur Herstellung der wasserlöslichen Polymerer sowie die so erhaltenen Monomer/Wasser-In-Öl Emulsionen.

EP 0 854 154 A1

## Beschreibung

Gegenstand der Erfindung sind Emulgatorgemische, deren Verwendung in einem Verfahren zur Herstellung wasserlöslicher Polymerer durch inverse Emulsions-Polymerisation sowie die dabei erhältlichen Monomer/Wasser-In-Öl Emulsionen.

Bedingt durch die hohe Molmasse, die während der Polymerisation, insbesondere von Acrylsäure oder Acrylamid entsteht, ist während der konventionellen Polymerisation ein starker Viskositätsanstieg der Reaktionsmasse zu beobachten. Ein derartiger Viskositätsanstieg führt zu Durchmischungsproblemen und Schwierigkeiten bei der Entfernung der entstehenden Reaktionswärme. Konventionelle Verfahren erfordern daher den Einsatz sehr aufwendiger Polymerisationsreaktoren, wenn kleine Umsätze mit geringem Polymergehalt vermieden werden sollen.

Hochmolekulare Polyacrylsäure oder Polyacrylamid werden deshalb heute überwiegend in Mehrphasensystemen wie Suspensionspolymerisation oder Emulsionspolymerisation hergestellt. Die Vorteile der Emulsions/Suspensionspolymerisation können wie folgt zusammengefaßt werden:

1.) Die Viskosität der Dispersion ist unabhängig vom Polymerisationsgrad, wodurch die Polymerisationswärme kontrolliert abgeführt werden kann.

2.) Relativ leichtes Einmischen von Komponenten durch Zulaufverfahren.

3.) Die stationäre Polymerkonzentration in den wachsenden Teilchen ist hoch.

4.) Copolymerisationen verlaufen im allgemeinen stationär zu chemisch einheitlichen Copolymeren.

Durch das Verfahren der inversen Emulsionspolymerisation können fernerhin gut handhabbare wasserlösliche Polymere in Emulsionsform hergestellt werden, die sich bei der Zugabe von Wasser durch Invertierung der Polymer-in-Öl Emulsion sehr viel rascher auflösen lassen als getrocknetes Polymerpulver.

Hochmolekulare Polymere, die auf dem Wege der inversen Emulsionspolymerisation hergestellt werden, haben in den letzten Jahren zunehmend an technischer Bedeutung gewonnen.

Für eine Reihe von Anwendungen werden heute fast ausschließlich lineare hochmolekulare Polymere aus inversen Emulsionspolymerisaten eingesetzt: Bei der Papierherstellung wird der Zellstoffsuspension ein kationaktives Acrylamid-Copolymer (Mw > $10^7$ g/mol) zugesetzt, um eine Mikroflockung zu bewirken, die die Zellstoffasern mit den Füllstoffen verknüpft und zudem die Entwässerung beschleunigt.

Bei der Wasseraufbereitung erzeugen Polymerknäule durch Brückenbildung zwischen mehreren Suspensionsteilchen größere Flocken, die die Sedimentation und Filtration feinteiliger Feststoffsuspensionen beschleunigen. Oberhalb einer Molmasse von etwa 2 x $10^6$ g/mol steigt die Sedimentationgeschwindigkeit proportional mit der Polymermasse.

Stabilisierung von Emulsionen und Dispersionen.

Die Herstellung einer inversen Polyacrylsäure- oder Polyacrylamidemulsion erfolgt üblicherweise über drei Schritte.

| | |
|---|---|
| 1. Schritt: | Herstellen einer Monomer/Wasser-In-Öl Emulsion |
| 2. Schritt: | Radikalische Polymerisation der Monomere im Monomer/Wasser-Tröpfchen, angeregt durch - Redox-Systeme und/oder radikalische Initiatoren |
| 3. Schritt: | Zugabe eines Inverttensides, das gewährleistet, daß die Polymerphase aus dem W/O System durch Invertieren über ein W/O/W System gleichmäßig im wäßrigen Medium freigesetzt wird. |

Emulgatorgemische zur Verwendung in der inversen Emulsionspolymerisation vernetzter Polymerer, insbesondere Polyacrylsäuren sind beispielsweise aus der US 5,216,070 A bekannt. Hier wird ein Verfahren zur Bildung von Wasser-In-Öl Emulsionen vorgeschlagen, bei dem ein wasserlösliches Polymer durch Emulsionspolymerisation von korrespondierenden Monomeren in Anwesenheit eines Initiators und eines Emulgators erhalten wird. Als Emulgator wird ein Polysiloxan-Polyalkylen-Polyether-Copolymer eingesetzt. Die Polymerisation des Säuremonomers kann bei teilweiser oder vollständiger Neutralisierung des Monomers und ohne negative Effekte auf die Emulsionsstabilität durchgeführt werden. Derartige alkoxylierte Copolymere, die als Emulgatorgemische eingesetzt werden bedingen jedoch häufig Probleme mit der biologischen Abbaubarkeit, so daß ein Bedürfnis nach neuen biologisch abbaubaren Emulgatorsystemen insbesondere auf der Basis nachwachsender Rohstoffe besteht.

Das vorgenannte Problem wird erfindungsgemäß in einer ersten Ausführungsform gelöst durch Emulgatorgemische zur Herstellung wasserlöslicher Polymerer durch inverse Emulsionspolymerisation entsprechender Monomerer oder Monomergemische, umfassend Glycerinmonooleat und Diacetylweinsäureester von Fettsäureglyceriden.

Mit Hilfe der vorliegenden Erfindung werden neue Emulgatorgemische zur Verfügung gestellt, die eine gute biologische Abbaubarkeit mit guten Emulgiereigenschaften (Stabilität der Emulsion, Förderung der Polymerisationsreaktion) vereinen.

Erfindungsgemäß wird bei der Herstellung von Monomer/Wasser-In-Öl Emulsionen darauf geachtet, nur Emulgatorgemische mit niedrigem Autoxidationspotential bereitzustellen, da die aus der Autoxidation entstehenden Radikale unkontrolliert in den Polymerisationsablauf eingreifen können. Ein besonders hohes Autoxidationspotential bieten beispielsweise Sorbitanester der Ölsäure und deren Ethoxylate, da bei diesen Substanzen schon während der Herstellung und Lagerung sowohl an der C=C Doppelbildung der Ölsäure als auch and den Etherbindungen des Sorbitanringes und/oder PEG-Restes Radikale entstehen können, die den Ablauf der radikalischen Polymerisation deutlich beeinflussen können.

Insbesondere die in die wäßrige Phase hineinragende hydrophile autoxidable Etherbindung des Sorbitanringes oder des PEG-Restes kann dabei nachweislich zur Radikalbildung führen.

Aufgrund des hohen Phasenvolumenverhältnisses zwischen dem Monomer/Wassergemisch und dem eingesetzten Öl bildet sich die Viskosität der Emulsionen und den daraus entstehenden Polymersuspensionen nach der erweiterten Einsteinschen Viskositätsbeziehung aus.

$$\ln \eta = A\,\varphi\,C_E + B$$

$\eta$ = Emulsionsviskosität
$\varphi$ = Phasenvolumenverhältnis
$C_E$ = Emulgatorkonzentration
A, B = Systemspezifische Konstanten

Geringe Verschiebungen des Phasenvolumenverhältnisses bewirken also drastische Veränderungen im Viskositätsverhalten der Emulsion und somit auch in der Wärmeabfuhr der exothermen Polymerisationsreaktion.

Des weiteren wird durch Viskositätsverschiebungen in der Emulsion die gleichmäßige Verteilung und kontrollierte Diffusion des am häufigsten gebrauchten Initiators AIBN (2,2'-Azobisisobutyronitril) beieinflußt.

Bei hohen Emulgatorüberschüssen verändert sich nicht nur die Viskosität der wäßrigen Monomer-In-Öl Emulsion, sondern es kann je nach Mizellgröße und Mizellkonzentration des eingesetzten Emulgators auch ein Teil des Initiators solubilisiert werden.

Erfindungsgemäß ist daher bei der Herstellung der Monomer/Wasser-In-Öl Emulsion auf ein möglichst kleines Tröpfchenverteilungsspektrum zu achten. Je breiter das Tröpfchenverteilungsspektrum, um so unterschiedlicher ist auch die über die Grenzfläche adsorbierte Initiatorkonzentration im Tröpfchen und die daraus resultierende Kinetik der Polymerisation von beispielsweise Acrylsäure/Acrylsäureamid.

Möglichst kleine Tröpfchen verlangsamen auch die Sedimentationsgeschwindigkeit der dispers vorliegenden Polymertröpfchen wie aus dem Stokeschen Gesetz abgeleitet werden kann und sorgen somit für eine erhöhte Emulsionsstabilität.

$$V = \frac{r^2\,\Delta\rho\,g}{\eta_0} \cdot \frac{2}{9}$$

r = Tröpfchenradius
$\Delta\rho$ = Dichtedifferenz zwischen Öl und Wasserphase
g = Erdbeschleunigungskonstante
$\eta_0$ = Emulsionsviskosität

Der über die Monomer/Wasser-In-Öl Emulsion zu erreichende Tröpfchenradius und die daraus resultierende Tröpfchenmasse sind bei weitem jedoch nicht klein genug, um durch die geforderte niedrige Viskosität der verwendeten Ölphase getragen werden zu können.

Wie bereits erwähnt, kann die Emulsions/Suspensionsviskosität über das Phasenvolumenverhältnis gesteuert werden

$$\ln \eta \sim \varphi$$

Es galt also den Idealbereich des Phasenvolumenverhältnisses zu suchen, in dem bei der vorgegebenen Tröpfchengröße eine ausreichende Stabilität der Emulsionen bei einer relativ niedrigen Viskosität im Schwerbereich des Rührens erzielt werden kann.

Dieser Bereich variiert je nach

- chemischer Struktur des eingesetzten Emulgators
- Dispersionsgrad
- Polarität der eingesetzten Ölphase

Erfindungsgemäß werden somit Emulgatorgemische auf der Basis von Glycerinmonooleat und Diacetylweinsäureester von Fettsäureglyceriden zur Verfügung gestellt.

Glycerinmonooleat ist bekanntermaßen eine farblose bis cremefarbende Paste mit einem Schmelzpunkt von 36 °C, unlöslich, jedoch gelbildend in kaltem und warmen Wasser, warmlöslich in Glycerin, Ethanol, Fetten und Kohlenwasserstoffen. Die im Handel erhältlichen Produkte unter diesen Bezeichnungen stellen üblicherweise Mischungen aus Glycerinmonooleat und -dioleat mit geringen Anteilen and Palmitin-, Stearin- und Linolglyceriden sowie Triglyceriden, freiem Glycerin und freien Fettsäuren dar. Bekanntermaßen wird Glycerinmonooleat zur Herstellung von W/O-Emulsionen in der Nahrungs-, Kosmetik- und Pharmaindustrie eingesetzt. Hieraus resultiert die bekanntermaßen gute biologische Abbaubarkeit dieses Bestandteils.

Ein weiterer wesentlicher Bestandteil der erfindungsgemäßen Emulgatorgemische sind Diacetylweinsäureester von Fettsäureglyceriden. In der DE 44 08 668 C1 wird berichtet, daß die Herstellung dieser Ester in der DE 20 21 565 C beziehungsweise in ZFL, Zeitschrift für Lebensmittel-Technologie und Verfahrenstechnik, 31. Jahrgang, 1980, Heft 6, beschrieben ist. Diacetylweinsäureester von Fettsäureglyceriden sind im Handel unter der Bezeichnung "Datamuls" der Th. Goldschmidt AG, Essen erhältlich. Je nach Wahl der Glyceride sind die Produkte wachsartig (gesättigt) oder pumpfähig (ungesättigt). Sie sind fettlöslich; in warmen Wasser lösen sie sich zu emulsionsartigen Systemen. Die Lösungsgeschwindigkeit und damit die Aktivität erhöht sich bei den wachsartigen Diacetylweinsäureestern mit zunehmender Feinteiligkeit. Da die Diacetylweinsäureester von Fettsäuremonoglyceriden bekanntermaßen als Backhilfsmittel eingesetzt werden, ist deren biologische Abbaubarkeit geprüft und gewährleistet. Obwohl prinzipiell auch pulverförmige oder wachsartige Diacetylweinsäureester von Fettsäureglyceriden erfindungsgemäß eingesetzt werden können, ist es im Sinne der vorliegenden Erfindung besonders bevorzugt, bei Raumtemperatur flüssige Diacetylweinsäureester einzusetzen, da diese durch Flüssigdosiereinrichtungen einfacher in die Polymerisationsreaktion eingebracht werden können.

Besonders bevorzugt im Sinne der vorliegenden Erfindung weisen die Diacetylweinsäureester die allgemeine Formel

a) 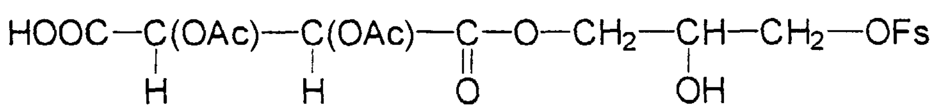

und

b) 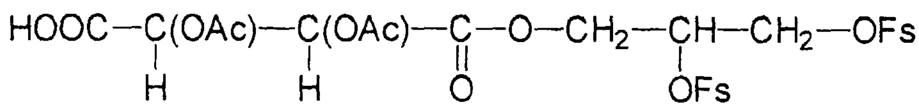

,

auf, wobei

Ac ein Acetylrest und
Fs ein Acylrest einer Fettsäure oder eines Fettsäuregemisches mit 8 bis 18 C-Atomen ist,
wobei a) und b) im Gewichtsverhältnis von 100 zu 0 bis 60 zu 40 vorliegen.

In einer bevorzugten Ausführungsform der vorliegenden Erfindung sind die Emulgatorgemische dadurch gekennzeichnet, daß die Fettsäureglyceridbasis der Diacetylweinsäureester von Sojabohnenöl-Monoglyceriden abgeleitet ist, da dieser Rest ein äußerst niedriges Autoxidationspotential aufweist und somit besonders bevorzugt zur Herstellung wasserlöslicher Polymerer durch inverse Emulsionspolymerisation eingesetzt werden kann.

Im Stand der Technik hat sich zur Herstellung wasserlöslicher Polymerer durch inverse Emulsionspolymerisation ein Emulgatorsystem mit den Handelsbezeichnungen "Span 80" (Sorbitanmonooleat) und/oder "Tween 81" (polyethoxiliertes Sorbitanmonooleat) durchgesetzt. Im Sinne der vorliegenden Erfindung ist es daher wünschenswert, Emulgatorgemische zur Verfügung zu stellen, die gleiche oder wenigstens ähnliche Eigenschaften aufweisen, wie die Emulgatoren oder Emulgatorgemische des Standes der Technik. Dementsprechend ist es besonders bevorzugt im Sinne der vorliegenden Erfindung das Gewichtsverhältnis von Glycerinmonooleat zu Diacetylweinsäureestern im Verhältnis von 10 : 1 bis 1 : 1, insbesondere 5 : 1 bis 3 : 1 einzustellen.

Die HLB-Skala stellt bekanntermaßen eine Möglichkeit dar, insbesondere nichtionische Tenside zu klassifizieren. So ist bekannt, daß Glycerinmonooleat einen HLB-Wert von 3,6 aufweist. Demgegenüber sind die HLB-Werte der Diacetylweinsäureester von Fettsäureglyceriden sehr hoch und bereiten bei der üblichen Messung außerordentliche Schwierigkeiten. Die erfindungsgemäßen Emulgatorgemische sollten jedoch vorzugsweise HLB-Werte aufweisen, die denen des Standes der Technik, siehe beispielsweise US 5,216,070 A entsprechen. Demgemäß ist es erfindungsgemäß besonders bevorzugt, Emulgatorgemische zur Verfügung zu stellen, die gekennzeichnet sind durch einen HLB-Wert von 4 bis 14, insbesondere 7 bis 12, vorzugsweise 10.

Eine weitere Ausführungsform der vorliegenden Erfindung besteht in einem Verfahren zur Herstellung wasserlöslicher Polymerer durch inverse Emulsionspolymerisation entsprechender Monomerer oder Monomergemische unter Einsatz der obengenannten Emulgatorgemische.

Erfindungsgemaß wird die Polymerisation durch die Schritte in der Reihenfolge durchgeführt:

a) Herstellen einer Monomer/Wasser-In-Öl Emulsion unter Verwendung eines Emulgators,
b) radikalische Polymerisation der Monomere im Monomer/Wasser-Tröpfchen mittels geeigneter Initiatorsysteme und
c) Zugabe eines Inverttensides zur Freisetzung der Polymerphase aus dem Wasser-In-Öl System, dadurch gekennzeichnet, daß man als Emulgator ein Gemisch aus Glycerinmonooleat und Diacetylweinsäureester von Fettsäureglyceriden einsetzt.

Mit Hilfe der vorliegenden Erfindung lassen sich eine große Zahl wasserlöslicher Polymere herstellen. Diese umfassen beispielsweise Polymere oder Copolymere von Acrylsäure, Methacrylsäure, Itaconsäure, Maleinsäure, Fumarsäure sowie Polyacrylamid einschließlich deren wasserlöslichen Salze, insbesondere Alkalimetallsalze, gegebenenfalls unter Verwendung von Vernetzungsmitteln. Wäßrige Lösungen der genannten Monomere sind üblicherweise sauer und weisen pH-Werte im Bereich von 2 bis 3 auf. Bevorzugt im Sinne der vorliegenden Erfindung sind wasserlösliche Salze von Polyacrylsäure, die geeignet sind für Endverbraucheranwendungen. Besonders bevorzugt im Sinne der vorliegenden Erfindung sind teilweise neutralisierte Monomere. Die teilweise Neutralisation der Monomeren kann beispielsweise durch Zugabe einer üblichen Base, die die Polymerisation nicht stört, geschehen. Besonders bevorzugt sind Natriumhydroxid und/oder Kaliumhydroxid.

Zur Herstellung von leicht vernetzten Polyacrylaten können dem Polymerisationssystem wasserlösliche Vernetzungsmittel beigefügt werden. Obwohl eine große Zahl von Vernetzungsmitteln im Stand der Technik bekannt ist, ist die Verwendung von N,N-Methylenbisacrylamid besonders bevorzugt. Weitere Komponenten, die gegebenenfalls im Reaktionsgemisch zugesetzt werden können, sind Gelatisierungsmittel wie Ethylendiamin-Tetraessigsäure (EDTA).

Die leicht vernetzten Wasser-In-Öl Polymeremulsionen gemäß der vorliegenden Erfindung weisen hohe Verdikkungskapazitäten in wäßrigen Systemen mit gewünschten biologischen Eigenschaften auf. Die Verdickungswirkung wird einfach erreicht durch Invertierung in das Wassersystem. Die erfindungsgemäßen Emulgatorgemische in Kombination mit an sich bekannten Polymerisationsinitiatoren wandeln Wasser-In-Öl teilweise neutralisierte Monomeremulsionen in Wasser-In-Öl Polymeremulsionen um. Die Wasser-In-Öl Polymeremulsionen können einfach und wirksam in Öl-In-Wasser Emulsionen durch Verdünnung mit wenigstens einem gleichen Teil Wasser auf Volumenbasis umgewandelt werden. Der pH-Wert der so erhaltenen Öl-In-Wasser Emulsionen beträgt üblicherweise 6 bis 7,5, wodurch die Produkte auch für Hautpflegeanwendungen geeignet sind. Das Volumenverhältnis von Wasserphase zu Ölphase der Emulsionen wird besonders durch die Stabilität und Handhabbarkeit der Emulsionen bestimmt. So ist es im Sinne der vorliegenden Erfindung besonders bevorzugt, das Volumenverhältnis von Wasserphase zu Ölphase der Emulsionen im Bereich von 2 zu 1 Vol.-Teil bis 4 zu 1 Vol.-Teil, insbesondere auf einen Gehalt an Ölphase von 20 bis 24, bevorzugt 22 Vol.-% einzustellen. Wird der Gehalt an Ölphase zu niedrig eingestellt, so wird eine feste Emulsion erhalten, die nicht verarbeitet werden kann. Ein zu hoher Gehalt an Ölphase bedingt wiederrum einen nicht vertretbaren Kostenfaktor.

Die Menge der einzusetzenden Emulgatorgemische sollte so gering wie möglich sein. Wird jedoch die Menge der Emulgatorgemische zu gering gewählt, so ist eine ausreichende Emulgierwirkung und insbesondere keine Stabilisierungswirkung auf die Emulsionen zu verzeichnen. Zu hohe Konzentrationen an Emulgatorgemischen sind jedoch wiederum ein nicht vertretbarer Kostenfaktor. Erfindungsgemäß wurde daher gefunden, daß eine Menge von 0,5 bis 3 Gew.-%, insbesondere 0,5 bis 2 Gew.-% besonders gute Ergebnisse in Bezug auf die Stabilisierungswirkung ergibt.

Der pH-Wert der Monomerlösung sollte im wesentlichen im schwachsauren neutralen bis leicht alkalischen

Bereich eingestellt werden. Insbesondere bei der Verwendung von wasserlöslichen Salzen ergibt sich bei leicht alkalischem pH-Wert eine höhere Sättigungskonzentration. Demgemäß wird besonders bevorzugt im Sinne der vorliegenden Erfindung der pH-Wert der Monomer/Wasser-In-Öl Emulsionen im Bereich von 6 bis 9, insbesondere 7 bis 8 eingestellt.

Eine weitere Ausführungsform der vorliegenden Erfindung betrifft Monomer/Wasser-In-Öl Emulsionen enthaltend Monomere oder Monomergemische von wasserlöslichen Polymeren, Wasserphase, Ölphase, Initiatorsystem und Emulgator, erhältlich nach einem Verfahren wie oben definiert.

Als Initiatorsystem kann hier ein üblicherweise eingesetztes Initiatorsystem verwendet werden, wie beispielsweise ein t-Butylhydroperoxid/Ascorbinsäure-Redoxinitiator-System oder weitere Redoxsysteme auf der Basis Chlorat, Sulfit und Hydrogenperoxid/Fe(II) sowie radikalische Initiatoren, insbesondere Persulfate, Hydrogenperoxid, Peroxide und Azoverbindungen wie beispielsweise 2,2'-Azobisisobutyrolnitril.

Mit Hilfe der vorliegenden Erfindung ist es möglich, auch noch mit einer Einsatzkonzentration von 2 Gew.-% oder weniger der Emulgatorgemische lagerstabile Emulsionen herzustellen, die hinsichtlich der Partikelgrößenverteilung konventionellen Emulsionen beispielsweise auf der Basis von Sorbitanmonooleat/PEG 4 Sorbitanmonooleat leicht überlegen sind.

Neben der durch die niedrige Emulgatorkonzentration bedingten hohen Effizienz bieten die erfindungsgemäße Emulgatormischungen auch den Vorteil, daß sie keine autoxidablen hydrophilen Ethergruppen enthalten. Eine derartige Mischung beeinflußt daher die Reaktiongenetik der Monomerlösung während der Polymerisation weit weniger als im Stand der Technik bekannte Emulgatorgemische, insbesondere solche, die autoxidable Polyetherketten aufweisen, die in die wäßrige Monomerphase hineinragen.

<u>Ausführungsbeispiele</u>

Als Glycerinmonooleate (GMO) wurde ein Handelsprodukt der Th. Goldschmidt AG, Essen (TEGIN® O) verwendet. Dieses wurde im Gewichtsverhältnis 4 : 1 (GMO/Ester) mit einem Diacetylweinsäureester-Fettsäureglycerid (einem Handelsprodukt der Th. Goldschmidt AG, Essen (Datamuls ®43)) gemischt.

Die Monomer/Wasserlösung bestand aus 37 Gew.-% Natriumacrylat in demineralisiertem Wasser. Die Leitfähigkeit betrug bei 25 °C 65 mS/cm, der pH-Wert = 7,60.

Herstellung der Emulsionen

Das Emulgatorgemisch wurde in dem Öl gelöst. In diese Lösung wurde unter starkem Rühren die wäßrige Natriumacrylatlösung zugegeben. Die so entstandene Emulsion des Typs W/O wurde 2 Minuten mit einem schnell laufenden Propellerrührer homogenisiert. Die Ansatzgröße betrug jeweils 200 g.

<u>Abhängigkeit der Emulsionsstabilität vom Phasenvolumenverhältnis und Herstellungstemperatur</u>

Wie alle zweiphasigen hochkonzentrierten W/O Emulsionen stabilisieren sich auch Monomer/Wasser-In-Öl Emulsionen über die durch das Phasenvolumenverhältnis steuerbare Viskosität.

Zum Auffinden des optimalen Phasenvolumenverhältnisses für die Herstellung der Emulsionen wurden unter Verwendung des Emulgatorgemisches Emulsionen mit variierendem Ölgehalt und Natriumacrylatlösungen hergestellt (Tabelle 1) und deren Stabilität bei verschiedenen Lagertemperaturen (Tabelle 2 und 3) überprüft.

Tabelle 1

| | Gew.-% | Gew.-% | Gew.-% | Gew.-% | Gew.-% | Gew.-% |
|---|---|---|---|---|---|---|
| **Phase A)** | | | | | | |
| Emulgatorgemisch | 2,00 | 2,00 | 2,00 | 2,00 | 2,00 | 2,00 |
| Ölphase % | 20,00 | 22,00 | 24,00 | 26,00 | 28,00 | 30,00 |
| | | | | | | |
| **Phase B)** | | | | | | |
| Natriumacrylat-Lösung | 78,00 | 76,00 | 74,00 | 72,00 | 70,00 | 68,00 |
| Herstellung: Phase B in Phase A in einem handelsüblichen Küchenmixer einarbeiten und 2 Minuten homogenisieren. | | | | | | |

Tabelle 2

| Stabilitätstest Herstellungstemperatur 25 °C | | | | | | | |
|---|---|---|---|---|---|---|---|
| | Ölphase [%] | 20,00 | 22,00 | 24,00 | 26,00 | 28,00 | 30,00 |
| | Lagerzeit | | | | | | |
| 25°C | 1 Tag | 1 | 1 | 1 | 1 | 1 | 1 |
| | 3 Tage | 1 | 1 | 1 | 4/O (2%) | 4/O (4,5%) | 4/O (7,5%) |
| | 1 Woche | 1 | 1 | 3/O | 4/O (3%) | 4/O (5 %) | 4/O (8 %) |
| | 2 Wochen | 1 | 1 | 4/O (3%) | 4/O (5%) | 4/O (8%) | 4/O (11 %) |
| | | | | | | | |
| 40°C | 1 Tag | 1 | 1 | 1 | 1 | 3/O | 4/O (3%) |
| | 3 Tage | 1 | 1 | 4/O (1%) | 4/O 3%) | 4/O (8%) | 4/O (8%) |
| | 1 Woche | 1 | 1 | 4/O (1%) | 4/O (3%) | 4/O (8%) | 4/O (8%) |
| | 2 Wochen | 1 | 1 | 4/O (6%) | 4/O (8%) | 4/O (11%) | 4/O (12%) |

Tabelle 3

| Herstellungstemperatur 30°C | | | | | | | |
|---|---|---|---|---|---|---|---|
| | Ölphase [%] | 20,00 | 22,00 | 24,00 | 26,00 | 28,00 | 30,00 |
| | Lagerzeit | | | | | | |
| 25°C | 1 Tag | 1 | 1 | 1 | 1 | 1 | 1 |
| | 3 Tage | 1 | 1 | 1 | 3/O | 4/O (5%) | 4/O (5,5%) |
| | 1 Woche | 1 | 1 | 1 | 4/O (3%) | 4/O (5 %) | 4/O (8 %) |
| | 2 Wochen | 1 | 1 | 4/O (3%) | 4/O (6%) | 4/O (8%) | 4/O (10 %) |
| | | | | | | | |
| 40°C | 1 Tag | 1 | 1 | 1 | 1 | 3/O | 4/O (3%) |
| | 3 Tage | 1 | 1 | 1 | 3/O | 4/O (7%) | 4/O (7,5%) |
| | 1 Woche | 1 | 1 | 3/O | 4/O (5%) | 4/O (10%) | 4/O (10%) |
| | 2 Wochen | 1 | 1 | 4/O (5%) | 4/O (8%) | 4/O (12%) | 4/O (13%) |
| Beobachtung:<br>1 = OK<br>2 = inhomogen<br>3/W = sichtbare Wasserabscheidung<br>3/O = sichtbare Ölabscheidung<br>4/W = meßbare Wasserabscheidung<br>4/O = meßbare Ölabscheidung<br>5 = totale Separation | | | | | | | |

Die Stabilitätsprüfungen zeigten, daß

* ein optimales Stabilitätsverhalten bei einem Einsatz von 22 % Ölphase erreicht wird

* die Stabilität der Emulsionen unabhängig von der Herstellungstemperatur ist.

Des weiteren wurden Optimierungsversuche bezüglich der Emulgatorenkonzentration (Tabelle 4) durchgeführt. Auch hier wurden die Emulgierversuche bei verschiedenen Temperaturen (Tabelle 5 und 6) durchgeführt.

Tabelle 4

| | Gew.-% | Gew.-% | Gew.-% | Gew.-% |
|---|---|---|---|---|
| **Phase A)** | | | | |
| Emulgatorgemisch | 2,50 | 2,00 | 1,75 | 1,50 |
| Ölphase % | 20,00 | 22,00 | 24,00 | 26,00 |
| | | | | |
| **Phase B)** | | | | |
| Natriumacrylat-Lösung | 75,50 | 76,00 | 76,25 | 76,50 |
| Herstellung: Phase B in Phase A mit ESGE-Stab einarbeiten und 2 Minuten homogenisieren. | | | | |

Tabelle 5

| Herstellungstemperatur 25 °C | | | | | |
|---|---|---|---|---|---|
| Emulgatorkonzentration [%] | | 2,50 | 2,00 | 1,75 | 1,50 |
| Ölphase [%] | | 22,00 | 22,00 | 22,00 | 22,00 |
| | Lagerzeit | | | | |
| R.T. | 1 Tag | 1 | 1 | 1 | 1 |
| | 3 Tage | 1 | 1 | 1 | 1 |
| | 1 Woche | 1 | 1 | 1 | 1 |
| | 2 Wochen | 1 | 1 | 1 | 1 |
| | | | | | |
| 25 °C | 1 Tag | 1 | 1 | 1 | 1 |
| | 3 Tage | 1 | 1 | 1 | 1 |
| | 1 Woche | 1 | 1 | 1 | 1 |
| | 2 Wochen | 1 | 1 | 1 | 1 |
| | | | | | |
| 40 °C | 1 Tag | 1 | 1 | 1 | 1 |
| | 3 Tage | 1 | 1 | 1 | 1 |
| | 1 Woche | 1 | 1 | 1 | 1 |
| | 2 Wochen | 1 | 3/O | 4/O (0,5%) | 4/O (1%) |

Tabelle 6

| Herstellungstemperatur 30 °C | | | | | |
|---|---|---|---|---|---|
| Emulgatorkonzentration [%] | | 2,50 | 2,00 | 1,75 | 1,50 |
| Ölphase [%] | | 22,00 | 22,00 | 22,00 | 22,00 |
| | Lagerzeit | | | | |
| R.T. | 1 Tag | 1 | 1 | 1 | 1 |
| | 3 Tage | 1 | 1 | 1 | 1 |
| | 1 Woche | 1 | 1 | 1 | 1 |
| | 2 Wochen | 1 | 1 | 1 | 1 |
| | | | | | |
| 25 °C | 1 Tag | 1 | 1 | 1 | 1 |
| | 3 Tage | 1 | 1 | 1 | 1 |
| | 1 Woche | 1 | 1 | 1 | 1 |
| | 2 Wochen | 1 | 1 | 1 | 1 |
| | | | | | |
| 40 °C | 1 Tag | 1 | 1 | 1 | 1 |
| | 3 Tage | 1 | 1 | 1 | 1 |
| | 1 Woche | 1 | 1 | 1 | 1 |
| | 2 Wochen | 1 | 1 | 3/O | 4/O (1%) |

Polymerisation

Weiterhin wurde eine Polymerisation mit Hilfe der oben genannten Bestandteile durchgeführt.

Aus 76 Gew.-Teilen Natriumacrylat-Lösung (37 %ig, Neutralisationsgrad 80 %), 22 Gew.-Teilen Ölphase (Exxsol® D-180-200) und 2 Gew.-Teilen Emulgatorgemisch (Glycerinmonooleat) aus 4 Teilen zu 1 Teil Diacetylweinsäureester von Fettsäureglyceriden (Datamuls® 43) wurde eine Emulsion hergestellt.

Bei Raumtemperatur wurde als Initiator A t-Butylhydroperoxid (10 % in Wasser) und B Ascorbinsäure (0,5 % in Wasser) in 3 Portionen über einen Zeitraum von vier Stunden 1,8 g A und 0,74 g B zugegeben und das Monomere polymerisiert.

Es entstand ein Polymerlatex mit einer Viskosität von 1800 mPas (Brookfield; LV-2, 12 RPM), das vergleichbare Eigenschaften wie bekannte Latices aufwies.

**Patentansprüche**

1. Emulgatorgemische zur Herstellung wasserlöslicher Polymerer durch inverse Emulsionspolymerisation entsprechender Monomerer oder Monomergemische umfassend Glycerinmonooleat und Diacetylweinsäureester von Fettsäureglyceriden.

2. Gemische nach Anspruch 1, dadurch gekennzeichnet, daß der bei Raumtemperatur flüssige Diacetylweinsäureester die allgemeine Formel

a) 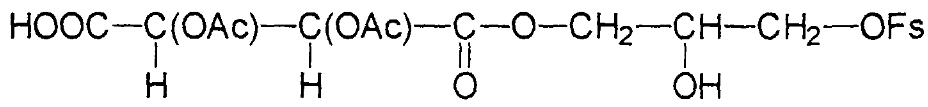

und

b) 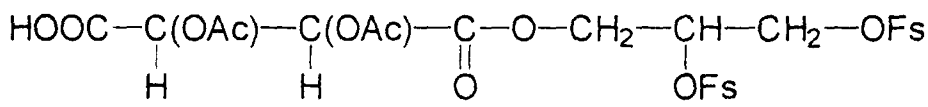

,

aufweist, wobei

Ac ein Acetylrest und
Fs ein Acylrest einer Fettsäure oder eines Fettsäuregemisches mit 8 bis 18 C-Atomen ist,
wobei a) und b) im Gewichtsverhältnis von 100 zu 0 bis 60 zu 40 vorliegen.

3. Gemische nach Anspruch 1, dadurch gekennzeichnet, daß die Fettsäureglyceridbasis von Sojabohnenölmonoglyceriden abgeleitet ist.

4. Gemische nach Anspruch 1, dadurch gekennzeichnet, daß das Gewichtsverhältnis von Glycerinmonooleat zu Diacetylweinsäureester 10 zu 1 bis 1 zu 1, insbesondere 5 zu 1 bis 3 zu 1 beträgt.

5. Gemische nach Anspruch 1, gekennzeichnet durch ein HLB-Wert von 4 bis 14, insbesondere 7 bis 12, vorzugsweise 10.

6. Verfahren zur Herstellung wasserlöslicher Polymerer durch inverse Emulsionspolymerisation entsprechender Monomerer oder Monomergemische durch die Schritte in der Reihenfolge:

a) Herstellen einer Monomer/Wasser-In-Öl Emulsion unter Verwendung eines Emulgators,
b) radikalische Polymerisation der Monomere im Monomer/Wasser-Tröpfchen mittels geeigneter Initiatorsysteme und
c) Zugabe eines Inverttensides zur Freisetzung der Polymerphase aus dem Wasser-In-Öl System,
dadurch gekennzeichnet, daß man
als Emulgator ein Gemisch aus Glycerinmonooleat und Diacetylweinsäureester von Fettsäureglyceriden einsetzt.

7. Verfahren nach Anspruch 6, dadurch gekennzeichnet, daß man Monomere oder Monomergemische von Acrylsäure, Methacrylsäure, Itaconsäure, Maleinsäure, Fumarsäure sowie Acrylamid einschließlich deren wasserlösliche Salze, insbesondere Alkalimetallsalze, gegebenenfalls unter Verwendung von Vernetzungsmitteln umsetzt.

8. Verfahren nach Anspruch 6, dadurch gekennzeichnet, daß man das Volumenverhältnis von Wasserphase zu Ölphase der Emulsionen im Bereich von 2 zu 1 Volumenteil bis 4 zu 1 Volumenteil, insbesondere auf einen Gehalt an Ölphase von 20 bis 24, bevorzugt 22 Vol.-% einstellt.

9. Verfahren nach Anspruch 6, dadurch gekennzeichnet, daß man die Emulgatorgemische mit einer Menge von 0,5 bis 3 Gew.-%, insbesondere 0,5 bis 2 Gew.-%, bezogen auf die Monomer/Wasser-In-Öl Emulsionen einsetzt.

10. Verfahren nach Anspruch 6, dadurch gekennzeichnet, daß man den pH-Wert der Monomer/Wasser-In-Öl Emulsionen im Bereich von 6 bis 9, insbesondere 7 bis 8 einstellt.

11. Monomer/Wasser-In-Öl Emulsionen enthaltend Monomere oder Monomergemische von wasserlöslichen Polymeren, Wasserphase, Ölphase, Initiatorsystem und Emulgatorgemische, erhältlich nach einem Verfahren wie in

einem oder mehreren der Ansprüche 6 bis 10 definiert.

Europäisches Patentamt

# EUROPÄISCHER RECHERCHENBERICHT

Nummer der Anmeldung: EP 98100033.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl6) |
|---|---|---|---|
| A | EP 0234202 A1 (SEITETSU KAGAKU CO. LTD.) 02. September 1987 (02.09.87), ganzes Dokument. -- | 1-11 | C 08 F 2/32<br>B 01 F 17/34 |
| A | DE 4138791 A1 (BASF AG) 27. Mai 1993 (27.05.93), ganzes Dokument. -- | 1-11 | |
| A,D | US 5216070 A (PLOCHOCKA et al.) 01. Juni 1993 (01.06.93), ganzes Dokument. ---- | 1-11 | |

RECHERCHIERTE SACHGEBIETE (Int. Cl6)

B 01 F 17/00
C 08 F 2/00
C 08 F 20/00
C 08 F 220/00

Der vorliegende Recherchenbericht wurde für alle Patentansprüche erstellt.

| Recherchenort | Abschlußdatum der Recherche | Prüfer |
|---|---|---|
| WIEN | 24-02-1998 | PUSTERER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 62